# FASCICULE DE BREVET EUROPEEN

(11) **EP 2 147 439 B1**
(45) Date de publication et mention de la délivrance du brevet: **20.02.2013**
(21) Numéro de dépôt: 08788000.1
(22) Date de dépôt: 14.03.2008
(51) Int. Cl.: F16L 41/08, F16L 5/02, G21C 1/09, G21C 13/032, G21C 17/017

(54) **PRESSURISEUR DE CENTRALE NUCLÉAIRE À EAU SOUS PRESSION**
DRUCKHALTER FÜR DRUCKWASSERKERNKRAFTWERK
PRESSURISER FOR A PRESSURISED WATER NUCLEAR POWER PLANT

(30) Priorité: 22.03.2007 FR 0753978
(43) Date de publication de la demande: 27.01.2010
(73) Titulaire: Areva NP, 92400 Courbevoie (FR)
(72) Inventeur: PETITJEAN, Sébastien, Michel, Marie, F-78400 Chatou (FR)
(74) Mandataire: Lebkiri, Alexandre
(86) Numéro de dépôt international: PCT/FR2008/050441
(87) Numéro de publication internationale: WO 2008/135679

(56) Documents cités:
- EP-A1- 0 012 057
- EP-A1- 0 158 544
- DE-A1- 3 218 337
- US-B1- 6 195 406

## Description

La présente invention concerne un pressuriseur de centrale nucléaire à eau pressurisée.

Un pressuriseur de centrale nucléaire à eau sous pression est une enceinte en pression qui fait partie du circuit primaire principal de la centrale. Il se compose de 3 viroles cylindriques verticales et de deux calottes hémisphériques aux deux extrémités. Il est construit en acier ferritique avec un revêtement en acier inoxydable austénitique sur toutes les surfaces internes en contact avec le fluide primaire. Le pressuriseur est muni, sur sa partie inférieure, de cannes chauffantes verticales et d'un piquage de liaison avec une ligne d'expansion. Il comporte sur sa calotte supérieure une tubulure munie d'une manchette thermique et d'une buse d'aspersion. La manchette thermique permet de protéger la tubulure contre les changements thermiques excessifs, réduisant ainsi autant que possible le dommage à la fatigue. La tubulure est réalisée en acier ferritique et recouverte sur sa face interne d'un revêtement en acier inoxydable. La tubulure est reliée à une tuyauterie d'aspersion via un embout de sécurité en acier inoxydable austénitique. La soudure entre la tubulure et l'embout est donc réalisée sous la forme d'une liaison bimétallique tandis que la liaison entre l'embout de sécurité et la tuyauterie d'aspersion en acier inoxydable austénitique est réalisée à l'aide d'une soudure homogène.

De façon générale, le document EP0158544 décrit une manchette thermique soudée à l'intérieur du conduit dans lequel elle se trouve. Le remplacement de cette manchette implique un double tronçonnage du conduit avant de pouvoir retirer la manchette en éliminant le cordon de soudure de la manchette sur le conduit.

Dans ce contexte, la présente invention vise à fournir un pressuriseur de centrale nucléaire à eau pressurisée facilitant notamment l'inspection et la maintenance de la liaison bimétallique mentionnée ci-dessus ainsi que du revêtement en acier inoxydable de la tubulure.

A cette fin, l'invention propose un pressuriseur de centrale nucléaire à eau pressurisée comprenant :
- une calotte supérieure munie d'une tubulure,
- un embout relié à ladite tubulure par l'intermédiaire d'une soudure,
- une manchette de protection de ladite soudure disposée à l'intérieur de ladite tubulure,
le pressuriseur étant caractérisé en ce que ladite manchette de protection est montée de manière amovible de sorte que l'opération de démontage de ladite manchette thermique se fait de l'intérieur dudit pressuriseur.

Grâce à l'invention, le démontage de la manchette de protection permet de procéder à l'inspection et à la maintenance de la liaison entre la tubulure d'aspersion et l'embout.

En outre, la manchette rendant inaccessible le revêtement intérieur en acier inoxydable de la tubulure, l'inspection et la maintenance de ce revêtement seront considérablement facilitées par le démontage de la manchette.

De plus, on notera que les manchettes utilisées dans l'art antérieur étaient soudées sur l'embout : le remplacement d'une manchette impliquait dés lors d'opérer une découpe au niveau de l'embout ou de la tuyauterie d'aspersion pour retirer la manchette et avoir accès à la soudure. Le fait de rendre la manchette amovible facilite donc également le remplacement de cette manchette par l'intérieur du pressuriseur sans découpage de l'embout ou de la tuyauterie d'aspersion.

Le pressuriseur peut également présenter une ou plusieurs des caractéristiques ci-dessous, considérées individuellement ou selon toutes les combinaisons techniquement possibles:
Avantageusement, la manchette de protection comporte sur sa surface externe une pluralité de plots antivibratoires régulièrement répartis.

Selon un mode de réalisation préférentiel, la tubulure est recouverte sur sa face interne d'un revêtement et le pressuriseur comporte une pièce support fixée sur ledit revêtement et présentant un filetage intérieur, la manchette de protection étant vissée sur le filetage intérieur.

En outre, la pièce support présente un filetage extérieur, le pressuriseur comportant une buse d'aspersion vissée sur le filetage extérieur.

De manière particulièrement avantageuse, l'extrémité inférieure de la manchette de protection est telle que, lorsque la manchette est en place, ladite extrémité est positionnée entre la pièce support et la buse d'aspersion.

Préférentiellement, le pressuriseur comporte des moyens de blocage en rotation de la buse d'aspersion qui peuvent être fixés à la pièce support par l'intermédiaire d'une soudure.

La présente invention a également pour objet un procédé de démontage d'une manchette thermique comprise dans un pressuriseur selon l'invention et comportant les étapes suivantes :
- retirer la soudure entre les moyens de blocage en rotation et la pièce support,
- enlever les moyens de blocage en rotation,
- dévisser la buse d'aspersion,
- dévisser la manchette thermique.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique simplifiée du circuit primaire d'un réacteur nucléaire à eau sous pression, comprenant un pressuriseur selon l'invention ;
- la figure 2 est une vue partielle en coupe, agrandie, du système d'aspersion 19 tel que représenté sur la figure 1 montrant la manchette de protection disposée à l'intérieur de la tubulure ;

Dans toutes les figures, les éléments communs portent les mêmes numéros de référence.

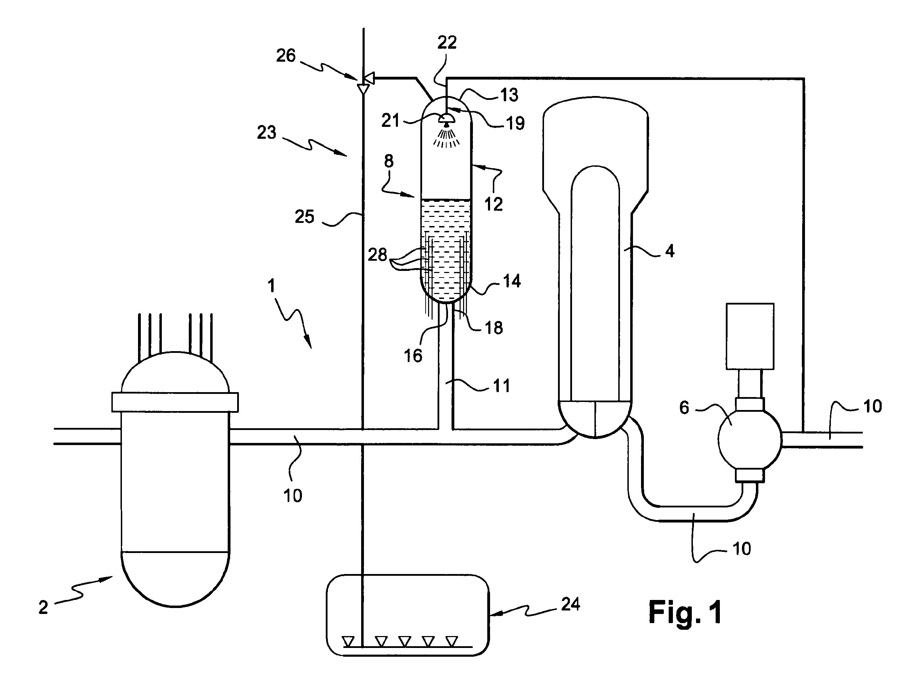

La figure 1 représente un circuit primaire 1 de réacteur nucléaire à eau sous pression comprenant trois ou quatre boucles primaires. La figure 1 est une représentation schématique simplifiée et seule une boucle primaire 10 est représentée. Ce circuit primaire 1 comprend une cuve 2 dans laquelle se trouvent des assemblages de combustible nucléaire, 3 ou 4 générateurs de vapeur 4 (un par boucle) pourvu de parties primaire et secondaire, 3 ou 4 pompes primaires 6 (une par boucle), et un pressuriseur 8. Chaque boucle primaire 10 permet de relier la cuve 2, un générateur de vapeur 4 et une pompe 6. Le pressuriseur 8 est relié à une des 3 ou 4 boucles primaires 10 par l'intermédiaire d'une ligne d'expansion 11. A des fins d'illustration, le pressuriseur 8 est relié à la boucle primaire 10 représentée sur la figure 1. Cette boucle primaire 10 contient de l'eau primaire, cette eau étant refoulée par la pompe 6 vers la cuve 2, traversant la cuve 2 en subissant un échauffement au contact des assemblages combustibles, puis traversant la partie primaire du générateur de vapeur 4 avant de revenir à l'aspiration de la pompe 6. L'eau primaire chauffée dans la cuve 2 cède sa chaleur dans le générateur de vapeur 4 à une eau secondaire traversant la partie secondaire de ce générateur. L'eau secondaire circule en boucle fermée dans un circuit secondaire non-représenté. Elle s'évapore en traversant le générateur 4, la vapeur ainsi produite entraînant une turbine à vapeur.

Le pressuriseur 8 est monté en dérivation sur la boucle primaire 10 par la ligne d'expansion 11 piquée sur le tronçon de la boucle primaire 10 reliant la cuve 2 au générateur 4. Elle est disposée à une élévation supérieure à celle de la pompe 6 et de la cuve 2. Le pressuriseur 8 comprend une enveloppe externe chaudronnée 12 sensiblement cylindrique et d'axe vertical, pourvue d'une calotte hémisphérique 13 et un fond inférieur 14. Le fond inférieur 14 comporte un orifice central 16 connecté au conduit 11 par un piquage 18.

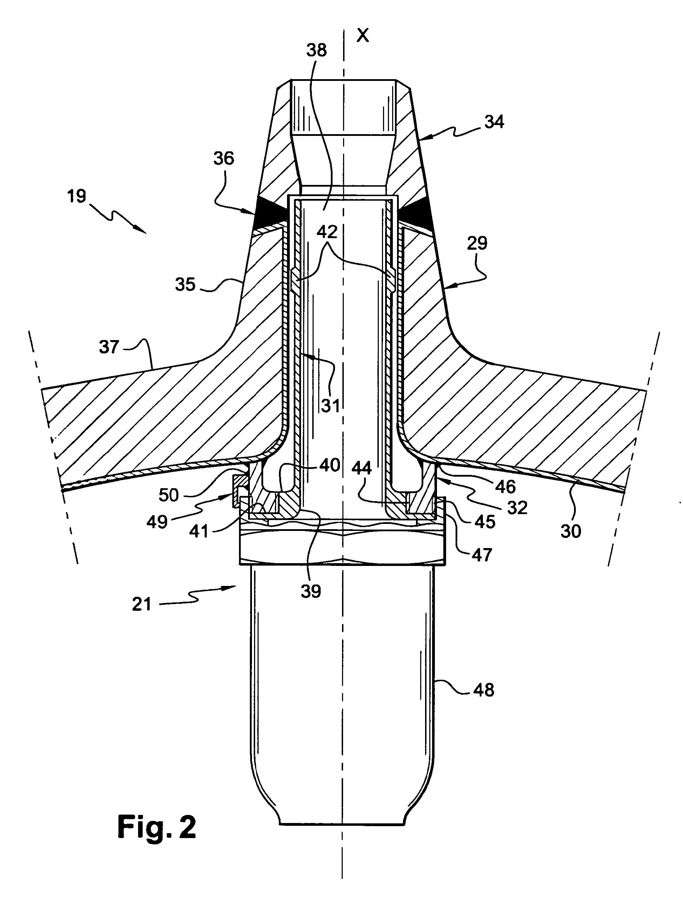

Le pressuriseur 8 comporte également un système d'aspersion 19 muni d'une buse d'aspersion 21 disposée à l'intérieur de l'enveloppe 12, une tuyauterie 22 en acier inoxydable austénitique raccordant le système d'aspersion 19 à la boucle primaire 10, au niveau du refoulement de la pompe 6, et des moyens (non-représentés) pour sélectivement autoriser ou interdire la circulation d'eau primaire dans la tuyauterie 22 jusqu'à la buse 21. Le système d'aspersion 19 sera décrit plus en détail en référence à la figure 2.

Le circuit primaire 1 comprend également un circuit de sécurité 23 comportant un réservoir de décharge 24, 3 tuyauteries 25 (dont une seule est représentée) connectant le réservoir 24 à la calotte 13 du pressuriseur, et 3 soupapes de sécurité 26 (dont une seule est représentée) interposées sur les tuyauteries 25 entre le réservoir 24 et le pressuriseur 8.

L'espace intérieur du pressuriseur 8 est en communication avec le circuit primaire 1 par l'intermédiaire du piquage 18 et de la ligne d'expansion 11. Le pressuriseur 8 est en permanence partiellement rempli par l'eau primaire, le niveau d'eau à l'intérieur du pressuriseur étant fonction de la pression courante de fonctionnement du circuit primaire. Le ciel du pressuriseur 8 est rempli par de la vapeur d'eau, à une pression sensiblement égale à la pression de l'eau circulant dans la tuyauterie primaire 10 reliant le générateur 4.

En cas de surpression dans le pressuriseur, la soupape 26 s'ouvre et la vapeur d'eau est évacuée jusqu'au réservoir 24, dans laquelle elle se condense.

Le pressuriseur 8 est équipé de plusieurs dizaines de cannes chauffantes électriques 28. Ces cannes sont disposées verticalement, et sont montées sur le fond inférieur 14. Elles traversent le fond 14 par des orifices prévus à cet effet (dans des manchettes), des moyens d'étanchéité étant interposés entre les cannes et leurs manchettes.

Le pressuriseur 8 a pour fonction de contrôler la pression de l'eau dans le circuit primaire. Du fait qu'il communique par la ligne d'expansion 11 avec une des tuyauteries primaires, il joue un rôle de vase d'expansion. Ainsi, quand le volume d'eau en circulation dans le circuit primaire augmente ou diminue, le niveau d'eau à l'intérieur du pressuriseur 8 va, selon le cas, s'élever ou s'abaisser.

Cette variation du volume d'eau peut résulter par exemple d'une injection d'eau dans le circuit primaire, ou d'une variation de la température de fonctionnement du circuit primaire.

Le pressuriseur 8 a également pour fonction d'augmenter ou de diminuer la pression de fonctionnement du circuit primaire.

Pour augmenter la pression de fonctionnement du circuit primaire, on alimente électriquement les cannes chauffantes 28, de telle sorte que celles-ci chauffent l'eau contenue dans la partie inférieure du pressuriseur et l'amènent à sa température d'ébullition. Une partie de cette eau s'évapore, de telle sorte que la pression dans le ciel du pressuriseur 8 augmente. Du fait que la vapeur est constamment en équilibre hydrostatique avec l'eau circulant dans le circuit primaire 1, la pression de fonctionnement de ce circuit primaire 1 augmente.

Pour faire diminuer la pression de fonctionnement du circuit primaire 1, on met en fonctionnement la buse d'aspersion 21 disposée dans le ciel du pressuriseur 8 en autorisant la circulation d'eau dans la tuyauterie 22 à l'aide des moyens prévus à cet effet. L'eau prélevée dans la tuyauterie primaire 10 au refoulement de la pompe 6 est projetée dans le ciel du pressuriseur 8, et provoque la condensation d'une partie de la vapeur d'eau qui s'y trouve. La pression de la vapeur d'eau dans le ciel du pressuriseur 8 diminue, de telle sorte que la pression de fonctionnement du circuit primaire 1 diminue elle aussi.

Ainsi, le pressuriseur 8 permet de maintenir la pression de l'eau du circuit primaire à 155 bars pour éviter l'ébullition de l'eau qui est chauffée à plus de 300°C.

La figure 2 est une vue partielle en coupe, agrandie, du système d'aspersion 19 tel que représenté sur la figure 1.

Le système d'aspersion 19 comporte :
- une tubulure d'aspersion 29 en acier ferritique du type SA 508 Gr3 recouverte sur sa face interne d'un revêtement 30 en acier inoxydable,
- une manchette de protection 31,
- une pièce support 32,
- une buse d'aspersion 21,
- un embout 34 en acier inoxydable austénitique du type 316 LN.

L'embout 34 présente une forme générale tronconique d'axe X verticale.

L'extrémité supérieure de l'embout 34 est reliée à la tuyauterie 22 telle que représentée en figure 1 par l'intermédiaire d'une soudure homogène.

La tubulure d'aspersion 29 comporte :
- une première partie 35 de forme générale tronconique et d'axe X vertical présentant une extrémité supérieure soudée à l'extrémité inférieure de l'embout 34 par l'intermédiaire d'une soudure 36 constituant une liaison bimétallique,
- une deuxième partie 37 de forme hémisphérique présentant une extrémité inférieure soudée sur la calotte hémisphérique 13 (non représentée sur la figure 2).

On notera que la tubulure 29 décrite ici correspond à une tubulure rapportée sur la calotte hémisphérique 13. L'invention est bien entendu également applicable au cas d'une tubulure intégrée à la calotte.

La tubulure 29 délimite donc un canal interne 38 mettant en communication l'espace interne de l'enveloppe 12 du pressuriseur avec la tuyauterie 22 telles que représentées en figure 1 via l'embout 34.

La manchette de protection thermique 31 protège en particulier la soudure 36. En effet, cette zone peut être soumise à des chocs thermiques du au fait que l'on injecte de l'eau d'aspersion relativement froide (température qui peut être de l'ordre de 15°C) dans le pressuriseur qui contient un fluide chaud ayant une température qui peut être de l'ordre de 345°C.

La manchette 31 présente une forme générale cylindrique d'axe centrale X et est disposée dans le canal interne 38. Elle comprend :
- une extrémité supérieure libre recouvrant la soudure 36,
- une extrémité inférieure munie d'un épaulement 39 sur sa face interne prolongé par une partie cylindrique 40 filetée sur sa surface extérieure.

La partie cylindrique 40 est elle-même prolongée par une collerette 41.

Afin d'éviter des vibrations latérales induites par le passage du fluide, quatre plots antivibratoires 42 sont répartis régulièrement sur la périphérie de la surface externe de la manchette 31.

La pièce support 32 est de forme générale cylindrique présentant un alésage à épaulement avec sur son extrémité inférieure un filetage intérieur 44 et un filetage extérieur 45. La pièce support 32 est soudée au revêtement intérieur 30 du pressuriseur au niveau de la tubulure d'aspersion 29 par l'intermédiaire d'une soudure 46.

La buse d'aspersion 21 comprend sur sa partie supérieure un écrou 47 et sur sa partie inférieure des moyens d'aspersion d'eau 48 dans le ciel du pressuriseur non détaillés ici.

La partie cylindrique 40 de la manchette thermique 31 est vissée sur le filetage intérieur 44 de la pièce support 32.

L'écrou 47 de la buse 21 est vissé sur le filetage extérieur 45 de la pièce support 32.

On évite le dévissage intempestif et la possible chute de la buse d'aspersion 21 grâce à l'utilisation d'une pièce 49 en forme de crochet permettant de bloquer en rotation l'écrou 47, ladite pièce 49 étant soudée via une soudure 50 à la pièce support 32.

En position finale, la collerette 41 de la manchette 31 est coincée entre la buse 21 et la pièce support 32.

En cas de besoin, l'opération de démontage de la manchette thermique de protection 31 est simplifiée en se faisant de l'intérieur du pressuriseur.

Le procédé permettant de démonter la manchette 31 à partir de l'intérieur du pressuriseur est le suivant :
- on retire la soudure 50 entre la pièce de blocage en rotation 49 et la pièce support 32,
- on retire la pièce de blocage en rotation 49,
- on dévisse la buse d'aspersion 21,
- on dévisse la manchette 31.

L'accès à la soudure bimétallique 36 ou au revêtement 30 permettant le contrôle ou la maintenance de ces derniers est grandement simplifié par le démontage de la manchette 31.

Bien entendu, l'invention n'est pas limitée au mode de réalisation qui vient d'être décrit.

Notamment, on peut envisager d'autres moyens de fixation de la manchette à la pièce support. La collerette de la manchette peut par exemple être munie d'orifices coïncidant avec des trous filetés dans la pièce support. Des vis traversant les orifices et vissées dans les trous peuvent permettre d'assurer la fixation.

## Revendications

1. Pressuriseur de centrale nucléaire à eau pressurisée comprenant :
- une calotte supérieure munie d'une tubulure (29),
- un embout (34) relié à ladite tubulure (29) par l'intermédiaire d'une soudure (36),
- une manchette de protection (31) de ladite soudure (36) disposée à l'intérieur de ladite tubulure (29),
ledit pressuriseur étant **caractérisé en ce que** ladite manchette (31) de protection est montée de manière amovible de sorte que l'opération de démontage de ladite manchette thermique se fait de l'intérieur dudit pressuriseur.

2. Pressuriseur selon la revendication 1, **caractérisé en ce que** ladite manchette de protection (31) comporte sur sa surface externe une pluralité de plots antivibratoires (42) régulièrement répartis.

3. Pressuriseur selon l'une des revendications 1 ou 2, **caractérisé en ce que** ladite tubulure (29) est recouverte sur sa face interne d'un revêtement (30), ledit pressuriseur comportant une pièce support (32) fixée sur ledit revêtement (30) et présentant un filetage intérieur (44), ladite manchette de protection (31) étant vissée sur ledit filetage intérieur (44).

4. Pressuriseur selon la revendication 3, **caractérisé en ce que** ladite pièce support (32) présente un filetage extérieur (45), le pressuriseur comportant une buse d'aspersion (21) vissée sur ledit filetage extérieur (45).

5. Pressuriseur selon la revendication 4, **caractérisé en ce que** l'extrémité inférieure (41) de ladite manchette de protection (31) est telle que, lorsque ladite manchette (31) est en place, ladite extrémité (41) est positionnée entre la pièce support (32) et la buse d'aspersion (21).

6. Pressuriseur selon l'une des revendications 4 ou 5, **caractérisé en ce qu'**il comporte des moyens de blocage en rotation (49) de ladite buse d'aspersion (21).

7. Pressuriseur selon la revendication 6, **caractérisé en ce que** lesdits moyens de blocage en rotation (49) sont fixés à ladite pièce support (32) par l'intermédiaire d'une soudure (50).

8. Procédé de démontage d'une manchette thermique de protection (31) comprise dans un pressuriseur selon la revendication 7 **caractérisé en ce qu'**il comporte les étapes suivantes :
- retirer la soudure (50) entre les moyens de blocage en rotation (49) et la pièce support (32),
- enlever les moyens de blocage en rotation (49),
- dévisser la buse d'aspersion (21),
- dévisser la manchette thermique (31).

## Claims

1. A pressuriser for a pressurised water nuclear power plant comprising:
- an upper cap provided with a tube (29),
- an end piece (34) connected to said tube (29) by means of a weld (36),
- a protection sleeve (31) for said weld (36) disposed inside said tube (29),
said pressuriser being **characterised in that** the protection sleeve (31) is mounted in a removable manner such that the operation of dismantling said thermal sleeve takes place from the interior of said pressuriser.

2. The pressuriser according to claim 1, **characterised in that** said protection sleeve (31) comprises on its external surface a plurality of anti-vibration pads (42) regularly spaced apart.

3. The pressuriser according to claim 1 or 2, **characterised in that** said tube (29) is covered on its internal face by a coating (30), said pressuriser comprising a support piece (32) fixed on said coating (30) and having an internal thread (44), said protection sleeve (31) being screwed onto said internal thread (44).

4. The pressuriser according to claim 3, **characterised in that** said support piece (32) comprises an external thread (45), the pressuriser comprising a spray nozzle (21) screwed onto said external thread (45).

5. The pressuriser according to claim 4, **characterised in that** the lower end (41) of said protection sleeve (31) is such that, when said sleeve (31) is in place, said end (41) is positioned between the support piece (32) and the spray nozzle (21).

6. The pressuriser according to any one of claims 4 or 5, **characterised in that** it comprises rotation blocking means (49) for said spray nozzle (21).

7. The pressuriser according to claim 6, **characterised in that** said rotation blocking means (49) are fixed to said support piece (32) by means of a weld (50).

8. A method of dismantling the thermal protection sleeve (31) contained in a pressuriser according to claim 7, **characterised in that** it comprises the following steps:
- removing the weld (50) between the rotation blocking means (49) and the support piece (32),
- removing the rotation blocking means (49),
- unscrewing the spray nozzle (21),
- unscrewing the thermal sleeve (31).

## Patentansprüche

1. Druckhalter für ein Druckwasserkernkraftwerk, der Folgendes umfasst:
- eine obere Haube, die mit einem Stutzen (29) ausgestattet ist,
- ein Ansatzstück (34) das mittels einer Schweißnaht (36) mit dem Stutzen (29) verbunden ist,
- eine Manschette (31) zum Schutz der Schweißnaht (36), die sich im Inneren des Stutzens (29) befindet,
wobei der Druckhalter **dadurch gekennzeichnet ist, dass** die Schutzmanschette (31) derart herausnehmbar montiert ist, dass der Vorgang des Ausbaus der Wärmemanschette im Inneren des Druckhalters vorgenommen wird.

2. Druckhalter nach Anspruch 1, **dadurch gekennzeichnet, dass** die Schutzmanschette (31) auf ihrer Außenfläche mehrere gleichmäßig verteilte schwingungshemmende Kontakte (42) umfasst.

3. Druckhalter nach einem der Ansprüche 1 oder 2, **dadurch gekennzeichnet, dass** der Stutzen (29) auf seiner Innenfläche mit einem Überzug (30) bedeckt ist, wobei der Druckhalter ein Stützteil (32) umfasst, das auf dem Überzug (30) befestigt ist und ein Innengewinde (44) aufweist, wobei die Schutzmanschette (31) in das Innengewinde (44) geschraubt ist.

4. Druckhalter nach Anspruch 3, **dadurch gekennzeichnet, dass** das Stützteil (32) ein Außengewinde (45) aufweist, wobei der Druckhalter eine Beregnungsdüse (21) umfasst, die auf das Außengewinde (45) geschraubt ist.

5. Druckhalter nach Anspruch 4, **dadurch gekennzeichnet, dass** das untere Ende (41) der Schutzmanschette (31) derart ist, dass, wenn die Manschette (31) an ihrem Platz ist, das Ende (41) zwischen dem Stützteil (32) und der Beregnungsdüse (21) positioniert ist.

6. Druckhalter nach einem der Ansprüche 4 oder 5, **dadurch gekennzeichnet, dass** er Mittel (49) zur Blockierung der Drehung der Beregnungsdüse (21) umfasst.

7. Druckhalter nach Anspruch 6, **dadurch gekennzeichnet, dass** die Drehblockiermittel (49) mittels einer Schweißnaht (50) an dem Stützteil (32) befestigt sind.

8. Verfahren zum Ausbau einer Wärmeschutzmanschette (31), die in einem Druckhalter nach Anspruch 7 enthalten ist, **dadurch gekennzeichnet, dass** das Verfahren die folgenden Schritte umfasst:
- Abheben der Schweißnaht (50) zwischen den Drehblockiermitteln (49) und dem Stützteil (32),
- Abnehmen der Drehblockiermittel (49),
- Abschrauben der Beregnungsdüse (21),
- Abschrauben der Wärmemanschette (31).
